# EUROPÄISCHE PATENTANMELDUNG

(11) **EP 4 509 779 A1**
(43) Veröffentlichungstag der Anmeldung: **19.02.2025**
(21) Anmeldenummer: 24192789.6
(22) Anmeldetag: 05.08.2024
(51) Int. Cl.: F25D 21/02, G01N 21/21, F25B 30/02

(54) **WÄRMETAUSCHER FÜR EINE WÄRMEPUMPE, WÄRMEPUMPENANLAGE UND VERFAHREN ZUM BETREIBEN EINER WÄRMEPUMPENANLAGE**

(30) Priorität: 14.08.2023 DE 102023121722
(71) Anmelder: Vaillant GmbH, 42859 Remscheid NRW (DE)
(72) Erfinder: Krampe-Zadler, Christof, 44628 Herne (DE)
(74) Vertreter: Popp, Carsten

(57) **Zusammenfassung**

Die Erfindung betrifft einen Wärmetauscher (9) für eine Wärmepumpenanlage (1), die zum Wärmeaustausch mit Umgebungsluft (17) eingerichtet ist. Der Wärmetauscher (9) weist mindestens einen optischen Sensor (19) auf, der mindestens einen Sender (23) zum Aussenden von elektromagnetischer Strahlung (28) und mindestens einen Empfänger (24, 37, 39) zum Erfassen der von Sender (23) ausgesendeten Strahlung umfasst, wobei der optische Sensor (19) dazu eingerichtet ist, im oder am Strahlungsweg der von Sender (23) ausgesendeten Strahlung angelagertes Wasser (30) in flüssiger oder fester Phase zu erkennen, wobei der optische Sensor (19) dazu eingerichtet ist, eine Änderung einer Totalreflexion an einer optischen Grenzfläche (32) beim Übergang von einem optisch dichteren Medium, aufweisend eine Brechzahl größer 1, in ein optisch dünneres Medium zu erfassen und die optische Grenzfläche (32) derart angeordnet und ausgerichtet ist, dass sich Wasser (30) in flüssiger oder fester Phase beim Betrieb des Wärmetauschers (9) anlagern kann, und die optische Grenzfläche (32) einen spiegelnden Bereich (34) umfasst, und ein erster Empfänger (24) an der optischen Grenzfläche (32) reflektierte Strahlung erfasst und ein zweiter Empfänger (37) an dem spiegelnden Bereich (34) reflektierte Strahlung erfasst. Zudem werden eine Wärmepumpenanlage (1), ein Verfahren zum Betreiben einer Wärmepumpenanlage (1) sowie eine Verwendung eines optischen Sensors (19) vorgeschlagen.

## Beschreibung

Die Erfindung betrifft einen Wärmetauscher für eine Wärmepumpe, eine Wärmepumpenanlage sowie ein Verfahren zum Betreiben einer Wärmepumpenanlage.

Die Erfindung nimmt sich dem Problem einer Vereisung eines Wärmetauschers einer Wärmepumpe, die der Umgebungsluft Wärme entzieht, an. Der Wärmetauscher kann dabei mit einem Verdampfer einer Luft-Wärmepumpe in Wirkverbindung stehen. Dieser kann im Normalbetrieb der Umgebungsluft Wärme entziehen und zur Heizung eines Gebäudes und/oder zum Erwärmen von Brauchwasser nutzbar machen. Unter Umgebungsluft wird hier immer die Außenluft, außerhalb von Gebäuden verstanden, auch wenn der Verdampfer oder Wärmetauscher selbst in einem Gebäude, beispielsweise einem frostfreien Aufstellraum, angeordnet ist. Der Verdampfer oder Wärmetauscher wird auch in einem solchen Fall von Außenluft durchströmt, die über geeignete Strömungswege geleitet wird. Weiter betrifft die Erfindung ein Computerprogrammprodukt zur Ausführung eines Verfahrens zum Abtauen eines Verdampfers oder Wärmetauschers einer Luft-Wärmepumpe.

Ein Verdampfer einer Luft-Wärmepumpe wird im Normalbetrieb in seinem Inneren von einem sehr kalten Kältemittel, dessen Temperatur deutlich unter der der Umgebungsluft liegt, durchströmt, wobei der Umgebungsluft Wärme entzogen wird, das Kältemittel verdampfen kann und dabei Wärme aufnimmt. Insbesondere Teile der Außenoberfläche des Verdampfers können dabei Temperaturen unterhalb des Gefrierpunktes von Wasser annehmen. Entsprechend gilt dies auch für andere Wärmetauscher, die beispielsweise Sole als Wärmeträgermedium nutzen.

Dadurch wird Feuchtigkeit aus der Luft (Wasserdampf) kondensiert und gefriert an diesen Teilen zu Wassereis. Dieses Eis behindert mit zunehmender Dicke den Wärmeaustausch und kann sogar zu mechanischen Schäden an dem Verdampfer bzw. Wärmetauscher führen. Es ist daher üblich, vereiste Verdampfer oder Wärmetauscher bei Bedarf oder periodisch abzutauen. Dazu kann beispielsweise eine Wärmepumpe in umgekehrter Richtung betrieben werden (sie arbeitet dann wie eine Klimaanlage oder ein Kühlschrank), wobei die Innenoberfläche des Verdampfers (der dann quasi als Kondensator dient) aufgeheizt wird und dadurch Eis auf seiner Außenoberfläche abtaut. Das Eis wandelt sich in flüssiges Wasser um, welches abtropft und abgeführt werden kann. Allerdings tritt eine Vereisung an der Umgebungsluft ausgesetzten Verdampfern oder Wärmetauschern besonders bei hoher relativer Luftfeuchte und entsprechenden Temperaturen auf, beispielsweise in einem Temperaturbereich von 0 Grad Celsius bis 6 Grad Celsius und hoher relativer Luftfeuchte. Dies erschwert das Abtauen, wobei ungünstige Windbedingungen (Richtung und Geschwindigkeit des Windes sind dabei wichtige Parameter) noch zusätzliche Schwierigkeiten bewirken können. Hierzu ist auch bekannt, zusätzliche, in der Regel elektrisch betriebene Heizgeräte zum Abtauen vorzusehen. Ein Vereisen des Wärmetauschers kann dabei insbesondere an Lamellen des Wärmetauschers, die von der Umgebungsluft durchströmt werden, oder auch an einem gegebenenfalls vorhandenen, in Strömungsrichtung der Umgebungsluft dem Wärmetauscher vorgelagerten, Lufteintrittsgitter des Wärmetauschers auftreten.

Schwierig erscheint eine Vereisung eines Wärmetauschers frühzeitig zu erkennen, insbesondere, bevor die Vereisung den Wärmeaustausch behindern kann. Dies könnte jedoch eine einfachere Enteisung ermöglichen, da die Durchströmbarkeit des Wärmetauschers zu einem frühen Zeitpunkt der Vereisung noch nicht eingeschränkt ist.

Beispielsweise aus der DE 33 28 532 A1 ist bekannt, als Maß für ein Auftreten einer Vereisung die Differenz der Temperatur der eintretenden Umgebungsluft und der Sauggastemperatur am Verdampfer heranzuziehen. Es hat sich allerdings gezeigt, dass diese Temperaturdifferenz für ein frühzeitiges Erkennen nicht geeignet ist. Auch kann eine Vereisung mittels des Kältemitteldruckes am Wärmetauscher oder über den Wirkungsgrad des Verdampfungsprozesses des Kältemittels erkannt werden.

Zudem wird eine erhöhte Leistungsaufnahme des Ventilators des Wärmetauschers zum Erkennen einer Vereisung genutzt. Diese tritt jedoch nachteilig erst bei einer erheblichen Vereisung auf, die den Strömungsweg der Umgebungsluft und damit den Wärmeaustausch bereits signifikant einschränkt.

Die bekannten Methoden ermöglichen nachteilig keine frühzeitige Erkennung einer beginnenden Vereisung des Wärmetauschers. Um einen dauerhaft effizienten Betrieb des Wärmetauschers und damit der Wärmpumpe zu ermöglichen sollte eine Auftretende Vereisung jedoch bereits in einem Anfangsstadium, in dem der Strömungsweg und der Wärmeaustausch noch nicht wesentlich eingeschränkt ist, erkannt werden.

Die FR2535842A1 offenbart eine Vorrichtung zur Erfassung der Reifdicke auf den Rippen beziehungsweise Lamellen eines Verdampfers einer Wärmepumpe. Es wird vorgeschlagen, ein Lichtsignal an einer Oberfläche zu reflektieren und das reflektierte Signal mit einem Empfänger zu überwachen. Das Auftreten von Reif oder Eis auf der Oberfläche kann durch eine Veränderung des Signals festgestellt werden. Bei der Lichtquelle kann es sich beispielsweise um eine LED handeln. Nachteilig reagiert die vorgeschlagene Vorrichtung auch auf eine Verschmutzung der Oberfläche.

Die IT0020120148A bezieht sich auf eine Wärmepumpe und ein Verfahren zur Steuerung einer automatischen Abtauung. An einem Wärmetauscher sind zwei Messelemente angeordnet, wobei eine Eisbildung zwischen den beiden Messelementen detektiert werden kann. Die Messelemente können optische Sensoren sein, insbesondere eine Lichtschranke. Auch dieses Verfahren reagiert unerwünschter Weise bei einer Verschmutzung der Messelemente.

Die JP H07-260 295A beschreibt eine Einrichtung zur Erkennung von Frost an einem Wärmetauscher eines Außen- oder Innenteils einer Klimaanlage. Das einfallende Licht wird dabei unter einem Winkel nahe dem Brewsterwinkel eingestrahlt, wodurch der reflektierte Lichtstrahl s-polarisiert wird. Bei einer Belegung des Substrates mit Wasser oder Eis ändert sich der Brechungsindex des Substrates und damit der Brewsterwinkel. Der reflektierte Lichtstrahl enthält somit auch p-polarisierte Anteile aus dem unpolarisiert eingestrahltem Licht, welche detektiert werden können und auf das Vorhandensein von Wasser oder Eis schließen lassen. Diese Einrichtung ist aufwendig und reagiert gleichfalls auf Verschmutzungen.

Die JP 2007-271168A beschreibt eine Einrichtung zur Frosterkennung an einer Klimaanlage, bei der eine Lichtquelle Licht auf eine zu detektierende Oberfläche emittiert, und eine Erfassungseinrichtung den reflektierten Strahl erfasst. Auch diese Einrichtung ist aufwendig und erlaubt keine präzise Erkennung einer Eisanlagerung.

Aufgabe der vorliegenden Erfindung ist daher, die mit Bezug auf den Stand der Technik geschilderten Probleme wenigstens teilweise zu lindern. Insbesondere soll die Erfindung einen Wärmetauscher und eine Wärmepumpenanlage vorschlagen, die ein besonders frühzeitiges Erkennen der Vereisung ermöglichen, insbesondere, bevor eine Einschränkung des Wärmetransportes und der Durchströmbarkeit des Wärmetauschers auftritt. Die Erfindung soll dabei keine umfangreichen baulichen Änderungen an einem Wärmetauscher erfordern und nach Möglichkeit an bestehenden Geräten mit vertretbarem Aufwand nachrüstbar sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Zur Lösung der Aufgabe wird ein Wärmetauscher für eine Wärmepumpe vorgeschlagen, der zum Wärmeaustausch mit Umgebungsluft eingerichtet ist. Der Wärmetauscher weist mindestens einen optischen Sensor auf, der mindestens einen Sender zum Aussenden (Emittieren) von Strahlung und mindestens einen Empfänger (Detektor) zum Erfassen der vom Sender ausgesendeten Strahlung umfasst. Der optische Sensor ist ferner dazu eingerichtet, im oder am Strahlungsweg der vom Sender ausgesendeten Strahlung angelagerten Wasser in flüssiger oder fester Phase zu erkennen. Der optische Sensor ist dazu eingerichtet, eine Änderung einer Totalreflexion an einer optischen Grenzfläche beim Übergang von einem optisch dichteren Medium, aufweisend eine Brechzahl größer 1, in ein optisch dünneres Medium zu erfassen. Die optische Grenzfläche ist derart angeordnet und ausgerichtet, dass sich Wasser in flüssiger oder fester Phase beim Betrieb des Wärmetauschers anlagern kann. Die optische Grenzfläche umfasst weiter einen spiegelnden Bereich. Ein erster Empfänger erfasst an der optischen Grenzfläche reflektierte Strahlung, und ein zweiter Empfänger erfasst an dem spiegelnden Bereich reflektierte Strahlung.

Bei der Wärmepumpe kann es sich um eine bekannte Wärmepumpe, zur Heizung oder Kühlung eines Gebäudes oder zur Bereitstellung von Warmwasser handeln. Die Wärmepumpe kann dazu eingerichtet sein, der Umgebungsluft Wärme zu entziehen und über einen Kältekreis zu transportieren und nutzbar zu machen. In dem Kältekreis kann ein Kältemittel zirkulieren und in einem Verdampfer Wärme aufnehmen und in Verflüssiger abgeben. Im Kältekreis kann der Phasenübergang des Kältemittels in Verdampfer bzw. Verflüssiger durch einen Verdichter und ein Expansionsventil gesteuert werden. Bei einem Heizbetrieb der Wärmepumpe kann der Verdampfer der Umgebungsluft Wärme entziehen und zur Nutzung innerhalb des Gebäudes über den Verflüssiger bereitstellen. Hierzu kann ein weiterer, mit dem Verflüssiger in Wirkverbindung stehender Wärmetauscher die Wärme beispielsweise auf einen, in einem Heizkreis zirkulierenden, Wärmeträger oder einen Wärmespeicher, wie einen Warmwasserspeicher oder einen Pufferspeicher, übertragen. Der Verdampfer kann dabei mit einem hier vorgeschlagenen Wärmetauscher in Wirkverbindung stehen bzw. ein Teil desselben sein.

Der Wärmetauscher kann eine Vielzahl von Lamellen zur Vergrößerung der, für den Wärmeaustausch zur Verfügung stehenden, Oberfläche aufweisen. Die Lamellen können dabei in wärmeleitender Verbindung mit einer vom Kältemittel durchströmten Leitung des Verdampfers stehen. Die Lamellen bzw. der Wärmetauscher können von einem Ventilator oder Gebläse angeströmt werden, um den Wärmeaustausch zu unterstützen. Die dem Wärmetauscher zuströmende Umgebungsluft kann dabei durch ein Lufteintrittsgitter zugeführt werden, das insbesondere Teil eines Gehäuses sein kann, in dem der Wärmetauscher angeordnet ist. Der Wärmetauscher kann beispielsweise Teil eines Außenteils einer Wärmepumpe sein. Dabei könnend die Lamellen des Wärmetauschers oder des Lufteintrittsgitters auch Teil einer Gitterstruktur sein.

Durch den Wärmeentzug kann die den Wärmetauscher durchströmende Umgebungsluft Luftfeuchtigkeit kondensieren und das Kondensat (Wasser) kann sich an Lamellen des Wärmetauschers oder des Lufteintrittsgitters anlagern und unter Umständen vereisen. Bei einem Fortschreiten der Vereisung kann der Strömungsweg der Umgebungsluft und damit auch der Wärmeaustausch eingeschränkt werden. Die Erfindung soll eine Möglichkeit eines frühzeitigen Erkennens einer Vereisung angeben.

Der Sender des optischen Sensors kann dazu eingerichtet sein, elektromagnetische Strahlung (Wellen) im Bereich des (für ein menschliches Auge) sichtbaren Lichtes (VIS) und/oder im Infrarotbereich auszusenden. Die Wellenlänge des sichtbaren Lichtes (VIS) kann dabei in einem Bereich von 350 Nanometer bis 650 Nanometer liegen und die der Infrarotstrahlung in einem Bereich von 650 Nanometer bis 7 Mikrometern. Die Erfindung ist zudem auch mit einem Sender, der dazu eingerichtet sein kann, elektromagnetische Strahlung (Wellen) im Bereich der Ultraviolett (UV)-Strahlung in einem Bereich der Wellenlänge von 230 Nanometern bis 350 Nanometern auszusenden, nutzbar.

Der mindestens eine optische Sensor kann dabei möglichst thermisch ideal an eine Lamelle des Wärmetauschers oder Lufteintrittsgitters gekoppelt sein. Dies bedeutet, dass die Oberfläche des optischen Sensors ein möglichst gleiches Verhalten gegenüber angelagertem Wasser (in flüssiger oder fester Phase) hat. Dies kann insbesondere die Wärmeleitfähigkeit und die Wärmekapazität betreffen.

Zudem kann der mindestens eine optische Sensor möglichst derart an einer Lamelle bzw. in einer Lamelle angeordnet sein, dass die gleichen thermodynamischen Bedingungen für eine Anlagerung von Wasser wie an einer Lamelle selbst bestehen. Hierzu kann der optische Sensor beispielsweise in eine Lamelle integriert sein, so dass dessen (Detektions-)Oberfläche eine Ebene mit der Lamelle bildet.

Gemäß einer Ausgestaltung können ein oder mehrere optische Sensoren am Wärmetauscher angeordnet sein. Insbesondere können ein oder mehrere optische Sensoren an Lamellen des Wärmetauschers und/oder des Lufteintrittsgitters über den verfügbaren Strömungsquerschnitt des Wärmetauschers verteilt angeordnet sein, und so vorteilhaft auch eine lokale oder partielle Vereisung des Wärmetauschers erkannt werden kann.

Gemäß einer Ausgestaltung können mindestens ein optischer Sensor und mindestens ein zusätzlicher Temperatursensor über den Strömungsquerschnitt verteilt angeordnet sein. So kann aus dem Signal eines zusätzlichen Temperatursensors in Verbindung mit dem, durch den optischen Senor ermittelten, Umgebungsmedium eine Vereisung erkannt werden. Insbesondere kann mittig im Strömungsquerschnitt ein optischer Sensor und ein zusätzlicher Temperatursensor und in äußeren Bereichen des Strömungsquerschnittes (beispielsweise geodätisch oben, unten und beidseitig) jeweils ein zusätzlicher Temperatursensor. Ein zusätzlicher Temperatursensor kann dabei dazu eingerichtet sein, ein Signal einer absoluten Temperatur zu erfassen.

Dabei kann ein Temperatursensor einen Sensor bezeichnen, der ein elektrisches Signal als Maß für die Temperatur liefert. Grundsätzlich können zur Ausführung der vorliegenden Erfindung beliebige Temperatursensoren zum Einsatz kommen, beispielhaft widerstandsbasierte Temperatursensoren, wie Heißleiter (NTC) oder Kaltleiter (PTC). Alternativ können auch aufwendigere Thermoelemente oder auch Halbleiter-basierte Temperatursensoren eingesetzt werden.

Gemäß einer Ausgestaltung kann der mindestens eine optische Sensor mindestens ein Heizelement umfassen, das dazu eingerichtet ist, am optischen Sensor angelagertes Kondensat und/oder Eis durch Einwirkung von Wärme zu entfernen. Beispielsweise kann das mindestens eine Heizelement auf der, dem optischen Sensor abgewandten, Seite, einer Lamelle oder direkt am optischen Sensor angeordnet sein. Das mindestens eine Heizelement kann nach einem Erkennen von Kondensat oder Eis, dieses entfernen und somit eine Detektionsfähigkeit des optischen Sensors wiederherstellen.

Bei dem mindestens einen Heizelement kann es sich insbesondere um ein widerstandsbasiertes elektrisches Heizelement handeln, das elektrischen Strom in Wärme umwandeln kann.

Bei dem mindestens einen Sender kann es sich um einen beliebigen Sender handeln, der dazu geeignet ist, eine oben genannte elektromagnetische Strahlung auszusenden (zu emittieren). So kann der Sender eine Beleuchtungseinrichtung, beispielsweise eine Leuchtdiode (LED, COB-LED oder Infrarot-LED) sein. Hierfür kann der Sender insbesondere elektrische Energie nutzen. Der Sender kann zudem über eine Kollimationseinrichtung, insbesondere eine Kollimationslinse, verfügen, die die ausgesandete Strahlung/die ausgesendeten Strahlen parallel ausrichtet. Bei der Kollimationseinrichtung kann es sich beispielsweise um eine Gradienten-Index-Linse (GRIN) handeln. Derartige Linsen weisen einen variablen Brechungsindex auf, der eine bogenförmige Ablenkung eines Strahles und damit vorteilhaft eine flache Ausgestaltung einer Linse zur Strahlungskollimation ermöglicht.

Der mindestens eine Empfänger (Detektor) kann eine Einrichtung zum Empfangen der vom Sender ausgesendeten Strahlung sein. Der Empfänger kann hierzu ein elektrisches Signal erzeugen, das einen Rückschluss der Intensität der auf den Empfänger einwirkenden Strahlung ermöglicht. Hierzu können insbesondere Photodioden, wie PIN-Dioden zum Einsatz kommen. Dabei versteht sich, dass der Empfänger auf die vom Sender emittierte Strahlung abgestimmt sein sollte. Auch der Empfänger kann eine Kollimationslinse aufweisen, die auftreffende parallele Strahlung in eine Detektionsfläche des Empfängers fokussiert. Auch hierfür können vorgenannte GRIN-Linsen zum Einsatz kommen.

Gemäß einer Ausgestaltung kann der mindestens eine optische Sensor einen Spiegel umfassen und der Empfänger eine Reflexion der vom Sender ausgesendeten Strahlung erfassen. Der Spiegel kann ein bekannter Spiegel zur Reflexion von sichtbarem Licht und/oder IR- bzw. UV-Strahlung sein, beispielsweise eine metallische Oberfläche. Der Sender kann die Strahlung mit einem Einfallswinkel auf den Spiegel emittieren und der Empfänger insbesondere im Ausfallswinkel angeordnet sein. Beispielhaft könnte der Spiegel auf einer (geodätische nach oben gerichteten) Oberfläche einer Lamelle und Sender und Empfänger auf der Unterseite einer darüber liegenden Lamelle angeordnet sein. Bei einer Anlagerung von Wasser in flüssiger oder fester Phase am Spiegel wird dessen Reflexionsvermögen geschwächt und die eintreffende Strahlung in verschiedene Raumrichtungen gestreut. Dadurch wird die Intensität der auf dem Empfänger auftreffenden Strahlung erfassbar reduziert.

Der der optische Sensor ist dazu eingerichtet, eine Änderung einer Totalreflexion an einer optischen Grenzfläche beim Übergang von einem optisch dichteren Medium, aufweisend eine Brechzahl größer 1, in ein optisch dünneres Medium (hier das Umgebungsmedium) mit einer geringeren Brechzahl zu erfassen. Dabei hat die Strahlung (Licht) im optisch dichteren Medium eine geringere Ausbreitungsgeschwindigkeit als im optisch dünneren Medium (dem Umgebungsmedium). Die optische Grenzfläche ist hierzu derart angeordnet und ausgerichtet, dass sich Wasser in flüssiger oder fester Phase beim Betrieb des Wärmetauschers an dieser anlagern kann. So ändert sich das Reflexionsverhalten der optischen Grenzfläche in Abhängigkeit des anliegenden Umgebungsmediums. So kann eine Strahlung, die auf die optische Grenzfläche auftrifft in das optisch dichtere Medium zurück reflektiert werden. In dem optischen dünneren Medium (dem Umgebungsmedium) kann eine oberflächengeführte Strahlungswelle an der optischen Grenzfläche entstehen. Bei an der optischen Grenzfläche angelagertem Wasser in fester und/oder flüssiger Phase führt dies zu einer Streuung der oberflächengeführten Strahlungswelle, wodurch die an der optischen Grenzfläche reflektierte Strahlung in ihrer Intensität erfassbar geschwächt wird. Insbesondere kann der Sender die Strahlung mit einem Einfallswinkel größer dem Grenzwinkel der Totalreflexion auf die optische Grenzfläche gerichtet sein. Der Einfallswinkel bezeichnet hier den Winkel, den die einfallende Strahlung mit einem Einfallslot (hier die Normale zur Spiegelfläche) einschließt. Der Grenzwinkel der Totalreflexion kann anhand des Brechungsgesetzes in Kenntnis der Brechzahlen (Brechungsindexe) der beiden an die optische Grenzfläche angrenzenden Medien berechnet werden.

Gemäß einer Ausgestaltung kann die optische Grenzfläche von einem geometrischen Körper zum Umgebungsmedium gebildet werden. Der geometrische Körper kann insbesondere aus einem transparenten, lichtdurchlässigen Material bestehen, wie beispielsweise Glas, Kunststoff, Mineral oder Halbleitermaterial.

Gemäß einer Ausgestaltung kann der geometrische Körper die Form eines Prismas, eines Halbzylinders, einer Halbkugel, einer sphärischen oder asphärischen Linse haben. Vorteilhaft kann die geometrische Form des geometrischen Körpers eine Symmetrieachse bezüglich der Ein- und Auskopplung der Strahlung aufweisen.

Gemäß einer Ausgestaltung kann die optische Grenzfläche auf der, dem Umgebungsmedium zugewandten Seite, eine Beschichtung aufweisen, die eine homogene Benetzung der optischen Grenzfläche begünstigt. Die Beschichtung kann die Eigenschaft eines geringen Kontaktwinkels zwischen Wasser und Beschichtungsfilm aufweisen. Die Beschichtung kann dabei die Benetzung des Sensors bzw. der optischen Grenzfläche verbessern. So kann eine Tropfenbildung auf der optischen Grenzfläche die Kontaktfläche (von Eis bzw. Kondensat mit der optischen Grenzfläche) mindern und somit nur eine partielle Störung der Oberflächenwellen führen, die dann in einer geringeren Modulation der zu erfassenden Intensität führen würde. Somit kann durch eine hydrophile Beschichtung das Ansprechverhalten des optischen Sensors verbessert werden Derartige hydrophile Nanobeschichtungen sind aus dem Stand der Technik bekannt und es kann eine geeignete ausgewählt werden,

Dabei umfasst die optische Grenzfläche einen spiegelnden Bereich, und ein erster Empfänger erfasst an der optischen Grenzfläche reflektierte Strahlung und ein zweiter Empfänger erfasst an dem spiegelnden Bereich reflektierte Strahlung. Der spiegelnde Bereich bezeichnet dabei einen Bereich der optischen Grenzfläche in dem diese ein Spiegel ist. Der spiegelnde Bereich kann insbesondere gebildet sein, indem eine metallische Beschichtung aufgebracht, beispielsweise aufgedampft wurde. Diese Ausgestaltung erlaubt vorteilhaft ein Erkennen von Intensitätsschwankungen des Senders durch Auswertung der erfassten Signale von erstem und zweitem Empfänger. Die Intensitätsschwankungen können beispielsweise durch Alterung bedingt oder durch eine Verschmutzung des Senders entstehen. Mit anderen Worten kann von dem zweiten Empfänger erfasste Strahlung, die an dem spiegelnden Bereich reflektiert wurde, als Referenzsignal betrachtet werden, das eine höhere Empfindlichkeit bei der Auswertung des an der optischen Grenzfläche reflektierten Signals ermöglichen.

Gemäß einer Ausgestaltung kann ein Polfilter dazu eingerichtet sein, zumindest einen Teil der Strahlung des mindestens einen Senders zu polarisieren. Der Polfilter kann hierfür insbesondere im Strahlengang zwischen Sender und optischer Grenzfläche angeordnet sein. Vorteilhaft ermöglicht polarisiertes Licht eine Unterscheidung, ob Wasser in flüssiger oder fester Phase an der optischen Grenzfläche angelagert ist. So zeigt Wasser in flüssiger Phase keine polarisierenden Eigenschaften von Strahlung (insbesondere Licht (VIS)). Demgegenüber wird bei einer Bildung von Eis die Polarisation des einfallenden Lichtes geändert/gedreht. Dabei entstehen partielle Kontrastmodulationen als Wechselwirkung zwischen polarisierter Strahlung (Licht) und dem kristallinen Eis, die eine erfassbare Minderung der Intensität im Strahlungsweg des polarisierten Lichtes bewirken. Für diese Ausgestaltung ist eine oben beschriebene Beschichtung, die eine homogene Benetzung der Grenzfläche bewirkt hilfreich, da diese auch eine homogene Kristallbildung an der optischen Grenzfläche bewirken kann. In Verbindung mit den polarisierenden Eigenschaften der optischen Grenzfläche (Fresnell Reflexion mit unterschiedlichen Reflexionsgraden bei s- und p- polarisiertem Licht) kann die durch das auftretende Eis an der optischen Grenzfläche hervorgerufene Polarisation zu einer erfassbaren Kontrastverbesserung und damit eine Unterscheidbarkeit von flüssiger und fester Phase des an der optischen Grenzfläche angelagerten Wassers bewirken.

Gemäß einer Ausgestaltung kann ein zweiter Polarisationsfilter zwischen optischer Grenzfläche und Empfänger angeordnet sein. Der zweite Polarisationsfilter (Polarisator) kann als Analysator vor den Empfänger betrachtet werden und die von der optischen Grenzfläche reflektierte Strahlung je nach Polarisationsstellung im ungestörten Fall (kein Kondensat) minimieren. Je nach Kondensat und dessen Phase kann die erfassbare Intensität bzw. deren Kontrast am Empfänger zunehmen (inverses Detektionsverhalten),

Hierzu können sowohl lineare als auch zirkulare Polarisatoren (Polfilter) eingesetzt werden.

Gemäß einer Ausgestaltung kann ein erster Empfänger an der optischen Grenzfläche reflektierte Strahlung eines Senders erfassen, ein zweiter Empfänger an einem spiegelnden Bereich der optischen Grenzfläche reflektierte Strahlung eines Senders erfassen und ein dritter Empfänger polarisierte und an der optischen Grenzfläche reflektierte Strahlung erfassen. Insbesondere kann hierfür die Strahlung eines Senders in drei Strahlenbereiche aufgeteilt werden, um senderbedingte Intensitätsunterschiede der Strahlung zu vermeiden. Diese Ausgestaltung ermöglicht durch die Erfassung des an dem spiegelnden Bereich reflektierten Referenzsignals eine besonders empfindliche Detektion und zudem mittels der Erfassung der polarisierten und an der optischen Grenzfläche reflektierten Strahlung eine Unterscheidung, ob Wasser in flüssiger oder fester Phase an der optischen Grenzfläche angelagert ist. Hierfür können erster, zweiter und dritter Empfänger direkt benachbart angeordnet sein und somit deren Detektionsflächen weitestgehend in einer Ebene liegen.

Gemäß einer Ausgestaltung kann, der mindestens eine Sender die Strahlung direkt in das optisch dichtere Medium einkoppeln und der Empfänger Strahlung direkt aus dem optisch dichteren Medium auskoppeln. Mit anderen Worten können der mindestens eine Sender und/oder der mindestens eine Empfänger mit dem geometrischen Körper derart verbunden sein, dass im Sender emittierte Strahlung direkt in den geometrischen Körper eingekoppelt und vom Empfänger direkt aus dem geometrischen Körper ausgekoppelt wird. Direkt bedeutet hier, dass zwischen Sender bzw. Empfänger und optischem Körper kein Zwischenraum besteht, der einem Umgebungsmedium zugänglich ist, so dass eine Einwirkung von Verschmutzungen ausgeschlossen werden kann. Hierfür können der Sender, Empfänger, eine Kollimationseinrichtung und/oder ein Polfilter derselben mit dem geometrischen Körper verbunden, beispielhaft aufgekittet/ aufgeklebt sein. Zudem ermöglicht diese Ausgestaltung einen sehr kompakten Aufbau eines optischen Sensors des Wärmetauschers.

Gemäß einer Ausgestaltung kann ein optischer Sensor des Wärmetauschers in einem MEMS-(micro-electro-mechanical systems)-Prozess bzw. einem MOEMS (oder MOMS) (micro-opto-electro-mechanical-systems)Prozess einem hergestellt sein. So kann vorteilhaft ein besonders kleiner monolithischer Aufbau eines optischen Sensors erreicht werden. Ein MEMS bzw. MOEMS-Prozess baut auf der Halbleitertechnik auf und ermöglicht die Herstellung eines miniaturisierten, monolithischen optischen Sensors für einen hier vorgeschlagenen Wärmetauscher.

Nach einem weiteren Aspekt der Erfindung wird auch eine Wärmepumpenanlage vorgeschlagen, aufweisend einen hier vorgeschlagenen Wärmetauscher. Die Wärmepumpenanlage kann eine Wärmepumpe umfassen und insbesondere zur Wärmeversorgung eines Gebäudes eingerichtet sein, also zur Verfügungstellung von Heizungswärme und/oder Warmwasser. Der hier vorgeschlagenen Wärmetauscher kann insbesondere mit einem Verdampfer in Wirkverbindung stehen und dazu eingerichtet sein, Umgebungsluft Wärme zu entziehen. Hierzu kann dieser in einem Außenteil der Wärmepumpenanlage angeordnet sein. Die Wärmepumpenanlage kann ein Regel- und Steuergerät umfassen, das zur Regelung- und Steuerung des Betriebes der Wärmepumpenanlage eingerichtet ist und auch mindestens einen optischen Sensor, gegebenenfalls in Verbindung mit einem oder mehreren Temperatursensoren Betreiben und deren Signale auswerten kann und so eine Vereisung des Wärmetauschers erkennen kann. Hierzu kann das Regel- und Steuergerät einen Prozessor zur Datenverarbeitung aufweisen und/oder über diesen verfügen. Zudem kann das Regel- und Steuergerät einen Speicher aufweisen bzw. auf diesen zugreifen, auf dem Daten zum Betreiben des optischen Sensors hinterlegt sind oder werden.

Gemäß einer Ausgestaltung kann die Wärmepumpenanlage, insbesondere deren Regel- und Steuergerät. dazu eigerichtet sein, eine Vereisung zu erkennen, indem mindestens ein Signal eines oder mehrerer Empfänger eines optischen Sensors eines hier vorgeschlagenen Wärmetauschers mit mindestens einem vorgegebenen Referenzsignal verglichen werden und bei einem Über- oder Unterschreiten des mindestens einen vorgegebenen Referenzsignals von einer Vereisung ausgegangen werden.

Das Regel- und Steuergerät der Wärmepumpenanlage kann gemäß einer weiteren Ausgestaltung dazu eingerichtet sein, eine Enteisung des Wärmetauschers zu initiieren. Hierzu kann ein bekanntes Verfahren zur Enteisung initiiert werden, beispielsweise eine Umkehr des Kältekreises der Wärmepumpe, die bewirkt, dass ein mit dem hier vorgeschlagenen Wärmetauscher gekoppelter Verdampfer Wärme abgibt, die zu einer Enteisung beiträgt.

Zudem kann das Regel- und Steuergerät der Wärmepumpenanlage dazu eingerichtet sein, nach einem Erkennen von Wasser in flüssiger und/oder fester Phase ein Heizelement des optischen Sensors in Betrieb zu nehmen und damit das Wasser zu entfernen und dessen Detektionsfähigkeit wieder herzustellen.

Nach einem weiteren Aspekt der Erfindung wird ein Verfahren zum Betreiben einer hier vorgeschlagenen Wärmepumpenanlage vorgeschlagen, bei dem ein Signal eines, an einem hier vorgestellten Wärmetauscher angeordneten optischen Sensors, genutzt wird, um einen Zeitpunkt für einen Enteisungsvorganges des Wärmetauschers zu bestimmen und den Enteisungsvorgang zu initiieren.

Gemäß einer Ausgestaltung kann durch ein mehrmaliges Entfernen von am optischen Sensor angelagertem Wasser (Trocknen bzw. Enteisen), insbesondere durch Inbetriebnahme eines hierzu eingerichteten Heizelementes ein Gradient der Vereisung bzw. der Kondensation (auch als Vereisungs- oder Kondensationsrate bezeichnet) ermittelt werden. Vorteilhaft kann so ein besonders geeigneter Zeitpunkt für ein Initiieren eines Enteisungsvorganges des Wärmetauschers bzw. des Lufteintrittsgitters bestimmt werden.

Weiter wird eine Verwendung eines optischen Sensors zum Erkennen einer Anlagerung von Wasser an einem Wärmetauscher einer Wärmepumpenanlage vorgeschlagen. Der optische Sensor kann insbesondere einen Spiegel und/oder einen geometrischen Körper umfassen, der mit einem Umgebungsmedium (Umgebungsluft, angelagertes Wasser in flüssiger oder fester Phase) eine optische Grenzfläche bildet. Die Verwendung kann insbesondere zum Erkennen einer Vereisung, also einer Anlagerung von Wasser in fester Phase erfolgen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die im Zusammenhang mit dem Wärmetauscher erörterten Details, Merkmale und vorteilhaften Ausgestaltungen können entsprechend auch bei der hier vorgestellten Wärmepumpenanlage als auch bei dem Verfahren zum Betreiben einer Wärmepumpenanlage auftreten und umgekehrt. Insoweit wird auf die dortigen Ausführungen zur näheren Charakterisierung der Merkmale vollumfänglich Bezug genommen.

Hier werden somit ein Wärmetauscher für eine Wärmepumpe, eine Wärmepumpenanlage ein Verfahren zum Betreiben einer Wärmepumpenanlage als auch eine Verwendung eines optischen Sensors angegeben, welche die mit Bezug auf den Stand der Technik geschilderten Probleme zumindest teilweise lösen. Insbesondere tragen der Wärmetauscher und die Wärmepumpenanlage dazu bei, eine Vereisung eines Wärmetauschers besonders frühzeitig zu erkennen, bevor diese die Durchströmbarkeit bzw. den Wärmetransport des Wärmetauschers einschränken können. Besonders vorteilhaft ist zu einem derartig frühen Zeitpunkt der Vereisung auch nur ein sehr kurzer Enteisungsvorgang notwendig und der Normalbetrieb des Wärmetauschers bzw. der Wärmepumpenanlage wird nur minimal beeinträchtigt. Mögliche, verfahrensbedingte Komforteinbußen für Nutzer können vorteilhaft in einem kaum oder nicht wahrnehmbaren Bereich gehalten werden. Zudem können die Wärmeverluste für einen Enteisungsvorgang in einem sehr geringen Rahmen gehalten werden.

Zudem kann ein hier vorgeschlagener Wärmetauscher einfach hergerichtet werden, da einem herkömmlichen Wärmetauscher lediglich an geeigneter Position mindestens ein optischer Sensor zuzufügen ist. Insofern ist die Erfindung besonders vorteilhaft auch zur Nachrüstung an bestehenden Wärmepumpenanlagen geeignet.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine hier vorgeschlagene Wärmepumpenanlage, und
- Fig. 2:: einen hier vorgeschlagenen Wärmetauscher,
- Fig. 3:: einen Strömungsquerschnitt eines hier vorgeschlagenen Wärmetauschers,
- Fig 4:: eine weitere alternative Ausgestaltung eines optischen Sensors, und
- Fig. 5:: eine weitere alternative Ausgestaltung eines optischen Sensors.

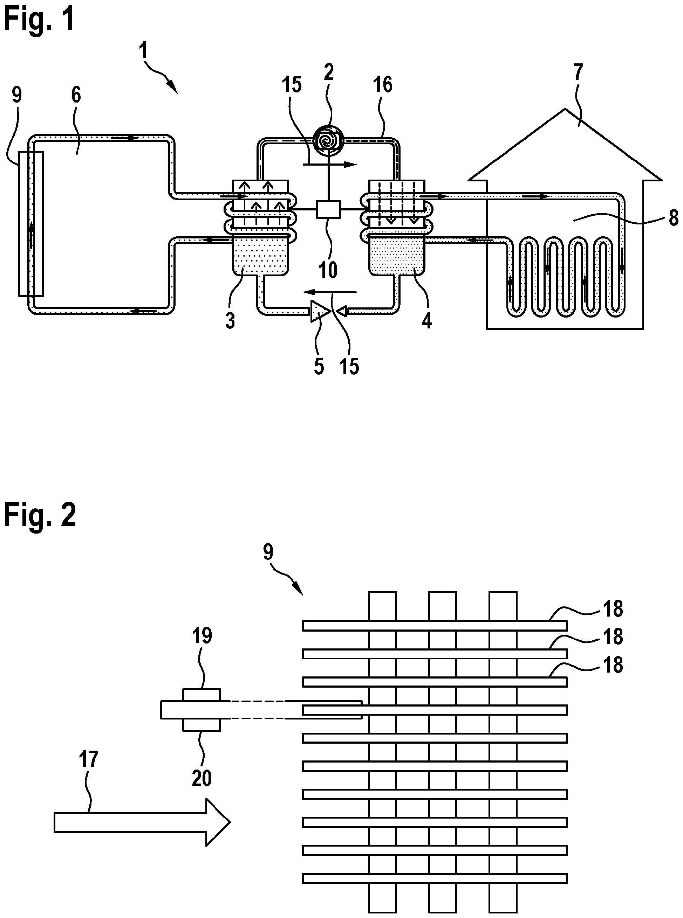

Fig. 1 zeigt beispielhaft und schematisch eine hier vorgestellte Wärmepumpenanlage 1, zur Versorgung eines Gebäudes 7 mit Wärmeenergie. Die Wärmepumpenanlage 1 kann ein Außenteil 6, das der Umgebungsluft 17 Wärme entzieht, und ein Innenteil 8 zur Abgabe der aufgenommenen Wärme in das Gebäude 7, umfassen. In einem Kältekreis 16 kann hierzu ein Kältemittel umgewälzt werden, das in einem Verdampfer 3 des Kältekreises 16 verdampfen und in einem Verflüssiger (Kondensator) 4 des Kältekreises 16 verflüssigt werden kann. Zudem können in dem Kältekreis 16 ein Verdichter 2 (auch als Kompressor bezeichnet) und ein Expansionsventil 5 vorgesehen sein, wobei der Verdichter 2 durch einen Elektromotor angetrieben werden kann. Das Expansionsventil 5 kann eine einstellbare Öffnungsweite aufweisen, die motorisch, beispielsweise mittels eines Schrittmotors, ansteuerbar sein kann. Das Kältemittel kann im Kältekreis 16 in einer Umwälzrichtung 15 vom Verdampfer 3 über den Verdichter 2 zum Verflüssiger 4 und weiter über das Expansionsventil 5 zurück zum Verdampfer 3 transportiert werden.

Das Klimagerät 1 kann ein Regel- und Steuergerät 10 umfassen, das dazu eingerichtet ist, den Kältekreis 16 zu regeln. Das Regel- und Steuergerät 10 kann zudem dazu eingerichtet sein, das Signal mindestens eines optischen Sensors 19 zu erfassen und auszuwerten sowie einen Enteisungsvorgang des Wärmetauschers 9 zu initiieren und zu steuern.

Fig. 2 zeigt gleichfalls beispielhaft und schematisch einen hier vorgeschlagenen Wärmetauscher 9. Dieser kann Lamellen 18 umfassen, die von Umgebungsluft 17 durchströmt und zwischen denen sich bei einer Vereisung 30 Eis ansammeln und den Strömungsweg blockieren kann. An einer Lamellen 18 kann ein optischer Sensor 19 und in unmittelbarer Nähe mindestens ein Heizelement 20 angeordnet sein.

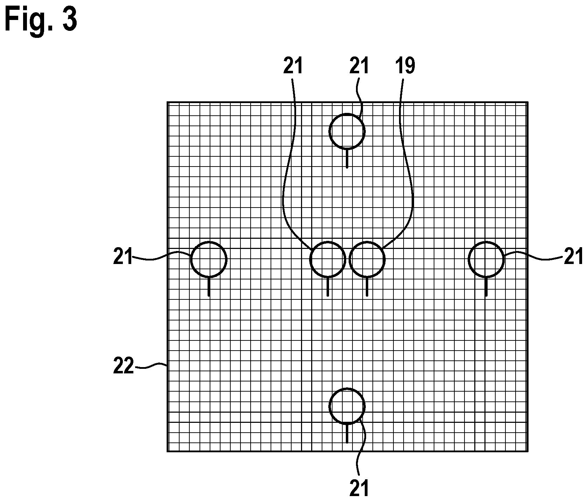

Fig. 3 zeigt beispielhaft und schematisch den Strömungsquerschnitt 22 eines hier vorgeschlagenen Wärmetauschers 9. Als beispielhafte Anordnung kann dieser mittig einen optischen Sensor 19 und einen Temperatursensor 21, sowie geodätisch oben unten und beidseitig einen weitere Temperatursensor 21. Diese Anordnung von kalorischem Sensor 19 und Temperatursensoren 21 ermöglicht einer Erkennung auch von partiellen Vereisungen 30 des Wärmetauschers 9 erkannt werden.

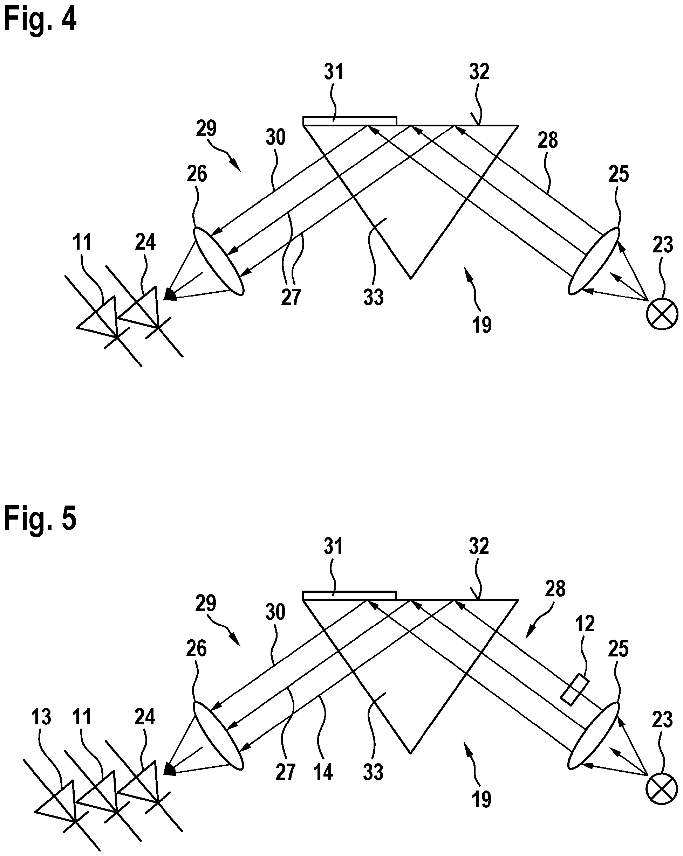

Fig. 4 zeigt beispielhaft und schematisch den optischen Sensor 19 mit einem spiegelnden Bereich 31. An dem spiegelnden Bereich 31 kann eine Referenzstrahlung 30 reflektiert werden und von einem zweiten Empfänger 11 erfasst werden. Die an der optischen Grenzfläche 32 reflektierte Strahlung 27 kann durch einen ersten Empfänger 24 erfasst werden. Die Referenzstrahlung 30 ermöglicht ein Erkennen einer Änderung der Intensität der einfallenden Strahlung 28 und kann somit die Empfindlichkeit des optischen Sensors 19 steigern.

Fig. 5 zeigt beispielhaft und schematisch den optischen Sensor 19 mit einem Polfilter 12, der dazu eingerichtet ist, einen Teil der vom Sender 23 emittierten Strahlung 28 zu filtern, wobei der polarisierte Strahlungsanteil der einfallenden Strahlung 28 auf die optische Grenzfläche 32 geleitet wird und die reflektierte, ausfallende polarisierte Strahlung 14 einem dritten Empfänger 13 zugeleitet wird. Bei einem Auftreten von angelagertem Wasser in fester Phase (kristallinem Eis) ist die ausfallende polarisierte Strahlung 14 gegenüber der ausfallenden (nicht polarisierten) und an der optischen Grenzfläche 32 reflektierten Strahlung 27 abgeschwächt. So kann vorteilhaft ein angelagertes Wasser in fester Phase detektiert werden. Gegebenenfalls könnte der Kontrast der vom dritten Empfänger 13 erfassbaren Strahlung durch einen zweiten (hier nicht gezeigten) Polarisationsfilter zwischen optischer Grenzfläche 32 und drittem Empfänger 13 erhöht werden.

### Bezugszeichenliste

- 1: Wärmepumpenanlage
- 2: Verdichter
- 3: Verdampfer
- 4: Verflüssiger
- 5: Expansionsventil
- 6: Außenteil
- 7: Gebäude
- 8: Innenteil
- 9: Wärmetauscher
- 10: Steuergerät
- 11: zweiter Empfänger
- 12: Polfilter
- 13: dritter Empfänger
- 14: polarisierte Strahlung
- 15: Umwälzrichtung
- 16: Kältekreis
- 17: Umgebungsluft
- 18: Lamelle
- 19: kalorischer Sensor
- 20: zweites Heizelement
- 21: zusätzlicher Temperatursensor
- 22: Strömungsquerschnitt Wärmetauscher
- 23: Sender
- 24: (erster) Empfänger
- 25: Kollimationsfilter Sender
- 26: Kollimationsfilter Empfänger
- 27: an optischer Grenzfläche reflektierte Strahlung
- 28: einfallende Strahlung
- 29: ausfallende Strahlung
- 30: Referenzstrahlung
- 31: spiegelnder Bereich
- 32: optische Grenzfläche
- 33: geometrischer Körper

## Patentansprüche

1. Wärmetauscher (9) für eine Wärmepumpenanlage (1), die zum Wärmeaustausch mit Umgebungsluft (17) eingerichtet ist, aufweisend mindestens einen optischen Sensor (19), der mindestens einen Sender (23) zum Aussenden von elektromagnetischer Strahlung (28) und mindestens einen Empfänger (24, 37, 39) zum Erfassen der von Sender (23) ausgesendeten Strahlung umfasst, wobei der optische Sensor (19) dazu eingerichtet ist, im oder am Strahlungsweg der von Sender (23) ausgesendeten Strahlung angelagertes Wasser (30) in flüssiger oder fester Phase zu erkennen, wobei der optische Sensor (19) dazu eingerichtet ist, eine Änderung einer Totalreflexion an einer optischen Grenzfläche (32) beim Übergang von einem optisch dichteren Medium, aufweisend eine Brechzahl größer 1, in ein optisch dünneres Medium zu erfassen und die optische Grenzfläche (32) derart angeordnet und ausgerichtet ist, dass sich Wasser (30) in flüssiger oder fester Phase beim Betrieb des Wärmetauschers (9) anlagern kann, und die optische Grenzfläche (32) einen spiegelnden Bereich (34) umfasst, und ein erster Empfänger (24) an der optischen Grenzfläche (32) reflektierte Strahlung erfasst und ein zweiter Empfänger (37) an dem spiegelnden Bereich (34) reflektierte Strahlung erfasst.

2. Wärmetauscher (9) nach Anspruch 1, wobei mindestens ein optischer Sensor (19) an mindestens einer Lamelle (18) des Wärmetauschers (9) und/oder eines Lufteinlassgitters des Wärmetauschers (9) angeordnet ist.

3. Wärmetauscher (9) nach einem der vorangehenden Ansprüche, wobei am Wärmetauscher (9) mindestens ein optischer Sensor (19) und mindestens ein zusätzlicher Temperatursensor (21) angeordnet ist.

4. Wärmetauscher (9) nach einem der vorangehenden Ansprüche, wobei mindestens ein Heizelement (20) dazu eingerichtet und angeordnet ist, angelagertes Wasser (30) von dem mindestens einen optischen Sensor (19) durch Einwirkung von Wärme zu entfernen.

5. Wärmetauscher (9) nach einem der vorangehenden Ansprüche, wobei der optische Sensor (19) einen Spiegel (27) umfasst und der Empfänger (24) eine Reflexion der vom Sender (23) ausgesendeten Strahlung erfasst.

6. Wärmetauscher (9) nach einem der vorangehenden Ansprüche, wobei der Sender (23) Licht im sichtbaren und/ oder ultravioletten Bereich und/oder Infrarotstrahlung aussendet.

7. Wärmetauscher (9) nach einem der vorangehenden Ansprüche, wobei der Sender (23) Strahlung in einen geometrischen Körper (33) einleitet und der Empfänger (24, 37, 39) Strahlung der Totalreflexion an der optischen Grenzfläche (32) des Übergangs vom geometrischen Körper (33) zum Umgebungsmedium (30, 17) erfasst.

8. Wärmetauscher (9) nach Anspruch 7, wobei der geometrische Körper (33) aus einem optisch transparenten Material besteht und die Form eines Prismas, eines Halbzylinders, einer Halbkugel, einer sphärischen oder asphärischen Halblinse aufweist.

9. Wärmetauscher (9) nach einem der vorangehenden Ansprüche, wobei ein Polfilter (38) dazu eingerichtet zumindest ein Teil der von dem mindestens einen Sender (23) emittierten Strahlung zu polarisieren und zwischen der optischen Grenzfläche (32) und dem mindestens einen Sender (23) angeordnet ist.

10. Wärmetauscher (9) nach Anspruch 9, wobei ein erster Empfänger (24) an der optischen Grenzfläche (32) reflektierte Strahlung erfasst, ein zweiter Empfänger (37) an einem spiegelnden Bereich (34) der optischen Grenzfläche (32) reflektierte Strahlung erfasst und ein dritter Empfänger (39) polarisierte und an der optischen Grenzfläche (32) reflektierte Strahlung erfasst.

11. Wärmetauscher (9) nach einem der vorangehenden Ansprüche, wobei der mindestens eine optische Sensor (19) monolithisch aufgebaut ist und/oder mittels eines MEMS-Prozess (Micro-ElectroMechanical-Systems-Prozess) hergestellt ist.

12. Wärmepumpenanlage (1) umfassend einen Wärmetauscher (9) nach einem der Ansprüche 1 bis 11.

13. Verfahren zum Betreiben einer Wärmepumpenanlage (1) nach Anspruch 12, wobei mehrmalig bei einem Erkennen von angelagertem Wasser (30) durch den optischen Sensor (19) das angelagerte Wasser (30) entfernt wird und ein Gradient der Anlagerung von Wasser bzw. einer Vereisung bestimmt wird.
